# EUROPEAN PATENT APPLICATION

(11) **EP 4 613 396 A1**
(43) Date of publication of application: **10.09.2025**
(21) Application number: 25152884.0
(22) Date of filing: 20.01.2025
(51) Int. Cl.: B21D 28/02, B21D 37/18, B21D 45/00, H01M 4/04, H01M 4/139, B26D 7/08

(54) **PUNCHING DEVICE AND PUNCHING METHOD USING SAME**

(30) Priority: 06.03.2024 KR 20240032255
(71) Applicant: SAMSUNG SDI CO., LTD., Yongin-si, Gyeonggi-do 17084 (KR)
(72) Inventor: Song, Sungsub, Yongin-Si, Gyeonggi-do 17084 (KR); Lee, Jaewook, Yongin-Si, Gyeonggi-do 17084 (KR)
(74) Representative: Gulde & Partner

(57) **Abstract**

A punching device (100, 200) includes: a die (122, 222, 330, 430, 530, 630, 730) to receive a substrate (230) disposed thereon; a stripper (118, 216, 310, 410, 510, 610, 710, 800, 900) spaced apart from and facing the die (122, 222, 330, 430, 530, 630, 730), and to move toward the substrate (230) to fix the substrate (230); and a punch (116, 214, 320, 420, 520, 620, 720) to move toward the substrate (230) and cut the substrate (230). The stripper (118, 216, 310, 410, 510, 610, 710, 800, 900) includes: a punch accommodation portion (118a, 810, 820, 830, 910, 920, 930) to accommodate the punch (116, 214, 320, 420, 520, 620, 720); and a punching oil supply passage (118b, 312, 412, 512, 814) located inside the stripper (118, 216, 310, 410, 510, 610, 710, 800, 900), and to supply a punching oil (O) to a side surface of the punch accommodation portion (118a, 810, 820, 830, 910, 920, 930).

## Description

### BACKGROUND

### 1. Field

Aspects of embodiments of the present disclosure relate to a punching device, more particularly, including a punching oil supply passage positioned inside a stripper, and a punching method using the punching device.

### 2. Description Of The Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

A positive electrode plate and a negative electrode plate of a lithium-ion battery may be manufactured by applying a cathode active material to a positive electrode current collector in the form of a metal thin-film (e.g., an aluminum foil), and applying an anode active material to a negative electrode current collector in the form of a metal thin-film (e.g., a copper foil). The electrode plate may be manufactured through mixing, coating, and pressing processes to manufacture a roll-shaped metal thin-film substrate coated with an active material, and slitting and notching processes to cut the roll-shaped metal thin-film substrate in accordance with desired battery specifications.

The above information disclosed in this Background section is for enhancement of understanding of the background of the present disclosure, and therefore, it may contain information that does not constitute related (or prior) art.

### SUMMARY

An electrode plate that satisfies desired specifications may be manufactured by blanking a substrate using a punching device through a notching process. Punching oil is sprayed on the substrate, such that the punching oil is applied to the substrate, and blanking is performed on the substrate to which the punching oil has been applied. In a case where the specifications of the electrode plate change, it may be desirable to install a new punching oil spraying device or change settings in accordance with the specifications of the electrode plate. However, it may take a lot of time and costs to install a new punching oil spraying device or to change the settings.

Embodiments of the present disclosure may be directed to a punching device, and a punching method using the punching device.

These and other aspects and features of the present disclosure will be described in or will be apparent from the following description of embodiments of the present disclosure.

According to one or more embodiments of the present disclosure, a punching device includes: a die configured to receive a substrate disposed thereon (e.g., a die on which a substrate corresponding to a cutting target is disposed); a stripper spaced apart from and facing the die, and configured to move toward the substrate to fix the substrate; and a punch configured to move toward the substrate and cut the substrate. The stripper includes: a punch accommodation portion configured to accommodate the punch; and a punching oil supply passage located inside the stripper, and configured to supply a punching oil to a side surface of the punch accommodation portion.

In an embodiment, the punch accommodation portion may have a shape of a through-hole through which the punch may be configured to be inserted via the stripper.

In an embodiment, one side surface of the punch accommodation portion may be opened.

In an embodiment, the punch accommodation portion may include a plurality of side surfaces, a nozzle of the punching oil supply passage may be located on a first side surface from among the plurality of side surfaces of the punch accommodation portion, and a side surface of the punch may be configured to face the first side surface.

In an embodiment, the punching oil supply passage may include a plurality of punching oil supply passages, a first nozzle of a first punching oil supply passage and a second nozzle of a second punching oil supply passage from among the plurality of punching oil supply passages may be located on the first side surface of the punch accommodation portion, and the side surface of the punch may be configured to face the first side surface.

In an embodiment, the punching oil supply passage may include a plurality of punching oil supply passages, a first nozzle of a first punching oil supply passage from among the plurality of punching oil supply passages may be located on the first side surface of the punch accommodation portion, a second nozzle of a second punching oil supply passage from among the plurality of punching oil supply passages may be located on a second side surface from among the plurality of side surfaces of the punch accommodation portion, and the side surface of the punch may be configured to face the first side surface.

In an embodiment, the stripper may further include an air supply passage located inside the stripper, and may be configured to supply air to the side surface of the punch accommodation portion.

In an embodiment, the punch may include an air supply hole extending through the punch, and may be configured to supply air to a bottom surface of the punch.

In an embodiment, the air may be supplied at a pressure of 0.1 Mpa or more.

In an embodiment, the air supply passage may be located below the punching oil supply passage.

In an embodiment, the stripper may include a plurality of punch accommodation portions configured to accommodate a plurality of punches, and a plurality of punching oil supply passages configured to supply the punching oil. A first nozzle of a first punching oil supply passage from among the plurality of punching oil supply passages may be located on a side surface of a first punch accommodation portion from among the plurality of punch accommodation portions, and a second nozzle of a second punching oil supply passage from among the plurality of punching oil supply passages may be located on a side surface of a second punch accommodation portion from among the plurality of punch accommodation portions. A side surface of a first punch may be configured to face the side surface of the first punch accommodation portion, and a side surface of a second punch may be configured to face the side surface of the second punch accommodation portion.

In an embodiment, the punching oil may be supplied in a fixed-quantity discharge method.

In an embodiment, the punching oil may be supplied at a predetermined flow rate.

In an embodiment, the punching device may further include a controller configured to adjust an amount of the punching oil. The controller may be configured to control a pump connected to the punching oil supply passage to supply the punching oil in proportion to a number of times the punch is raised and lowered.

In an embodiment, the punching device may further include a controller configured to adjust an amount of the air. The controller may be configured to control an air pump connected to the air supply passage to supply the air in proportion to a number of times the punch is raised and lowered.

According to one or more embodiments of the present disclosure, a punching method includes: supplying a substrate between a stripper and a die; supplying a punching oil to a side surface of a punch accommodation portion of the stripper through a punching oil supply passage located inside the stripper; and moving a punch and the stripper toward the substrate, such that the stripper fixes the substrate and the punch cuts the substrate. A surface of the punch is disposed to face a side surface of the stripper.

In an embodiment, the supplying of the punching oil to the side surface of the punch accommodation portion may include supplying the punching oil to a plurality of punching oil supply passages by a pump, such that the punching oil may be sequentially supplied through a plurality of nozzles located on the side surface of the punch accommodation portion.

In an embodiment, the method may further include removing foreign materials attached to the surface of the punch by supplying air to the surface of the punch using at least one of an air supply passage located in the stripper or an air supply hole located in the punch.

In an embodiment, the supplying of the punching oil to the side surface of the punch accommodation portion may include supplying the punching oil to the side surface of the punch accommodation portion before cutting the substrate.

In an embodiment, the removing of the foreign materials attached to the surface of the punch may include removing the foreign materials attached to the surface of the punch by supplying air to the surface of the punch after punching the substrate.

According to some embodiments of the present disclosure, even in a case where friction occurs when the punch and the metal thin-film substrate come into contact with each other, damage to the punch may be prevented or substantially prevented.

According to some embodiments of the present disclosure, repeated punching may prevent or substantially prevent foreign materials (e.g., a metal powder and the like) from being stuck to the mold, or may prevent or substantially prevent burrs from being formed on the substrate.

According to some embodiments of the present disclosure, the sticking of the foreign materials and the formation of the burrs may be effectively prevented by supplying the punching oil to the side surface of the punch and the side surface of the punch accommodation portion of the stripper.

According to some embodiments of the present disclosure, low voltage defects and short circuit defects in secondary batteries may be prevented or substantially prevented.

According to some embodiments of the present disclosure, the removal of the foreign materials stuck/attached to the surface of the punch may be further facilitated by the air supply nozzle and/or the air supply hole.

According to some embodiments of the present disclosure, the punching device may supply the punching oil directly to the cut region, such that the punching oil may be supplied evenly or substantially evenly.

According to some embodiments of the present disclosure, because the stripper may not be designed to directly cut the metal thin-film substrate, the corresponding passage or nozzle may not be easily damaged, even in a case where the stripper includes a punching oil supply passage, a punching oil supply nozzle, an air supply passage, and/or an air supply nozzle, thereby improving the durability of the punching device.

According to some embodiments of the present disclosure, the air supply nozzle may be disposed to face the side surface of the punch, such that air with a stronger pressure may be supplied to the side surface of the punch in which a relatively larger amount of powder may be attached.

According to some embodiments of the present disclosure, the air supply nozzle may prevent or substantially prevent flowing punching oil from flowing into the air supply nozzle by supplying air to the side surface of the punch accommodation portion.

According to some embodiments of the present disclosure, in the structure in which the plurality of punches are raised and lowered, the punching oil may be effectively supplied to the plurality of punches by forming a passage with a simpler structure in (e.g., only in) the stripper, without forming the passage in each punch.

According to some embodiments of the present disclosure, the punching oil may be supplied more smoothly by forming the punching oil supply nozzles on the plurality of side surfaces of the stripper.

According to some embodiments of the present disclosure, the punching device may collectively control the supply of the punching oil through the punching oil passage, making it easier to manage the supply of the punching oil.

However, aspects and features of the present disclosure are not limited to those described above, and other aspects and features not mentioned will be clearly understood by a person skilled in the art from the detailed description, described below.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates an exploded perspective view of a punching device according to an embodiment of the present disclosure;
FIG. 2 illustrates a front view of a punching device according to an embodiment of the present disclosure;
FIG. 3 illustrates a side view of a punching device according to an embodiment of the present disclosure;
FIG. 4 illustrates a side view of a punching device according to an embodiment of the present disclosure;
FIG. 5 illustrates a side view showing a state in which a punching oil is supplied in a punching device according to an embodiment of the present disclosure;
FIG. 6 illustrates a side view showing a state in which a metal thin-film substrate is punched by a punching device according to an embodiment of the present disclosure;
FIG. 7 illustrates a side view showing a state in which air is supplied in a punching device according to an embodiment of the present disclosure;
FIG. 8 illustrates a perspective view of a stripper according to an embodiment of the present disclosure;
FIG. 9 illustrates a perspective view of a stripper according to an embodiment of the present disclosure; and
FIG. 10 illustrates a flowchart showing an example of a punching method according to an embodiment of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical aspects and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

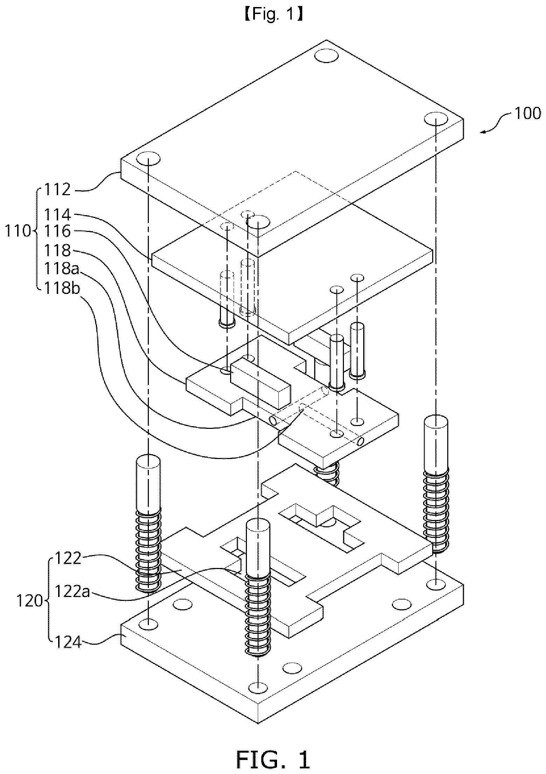

FIG. 1 illustrates an exploded perspective view of a punching device 100 according to an embodiment of the present disclosure.

The punching device 100 according to an embodiment of the present disclosure may include (e.g., may be) a punching mold that may punch a continuously provided metal thin-film substrate, and cut the thin-film substrate into substrates satisfying a desired standard (e.g., a predetermined standard). Referring to FIG. 1, the punching device 100 may include a first mold 110 and a second mold 120. The first mold 110 may refer to an upper mold. The second mold 120 may refer to a lower mold. As used herein, an upper portion may be a direction toward the first mold 110 (or a portion thereof), and a lower portion may be a direction toward the second mold 120 (or a portion thereof). In an embodiment, a substrate coated with an active material may be provided to the punching device 100.

The first mold 110 may include a first base plate 112, a stripper plate 114, a punch 116, and a stripper 118. The stripper plate 114 may be fixedly connected to (e.g., coupled to or attached to) the lower portion of the first base plate 112. The stripper 118 may be connected to (e.g., coupled to or attached to) the stripper plate 114. For example, a stripper connection pin may connect the stripper 118 to the stripper plate 114. The stripper 118 may include a punch accommodation portion 118a. The punch 116 may be connected to (e.g., coupled to or attached to) the stripper plate 114, and may be accommodated in the punch accommodation portion 118a of the stripper 118.

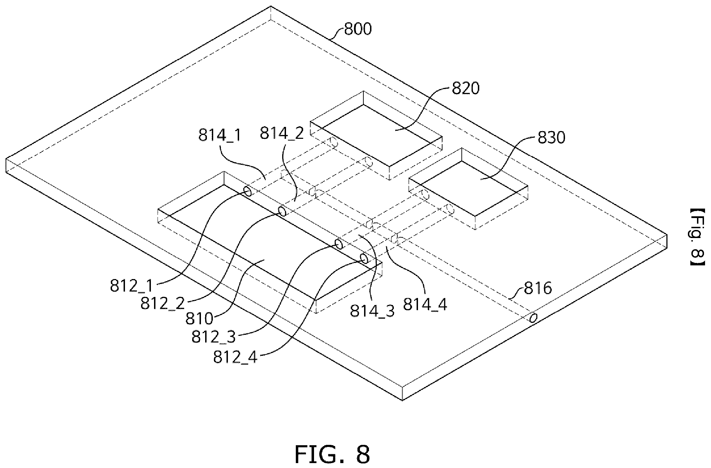

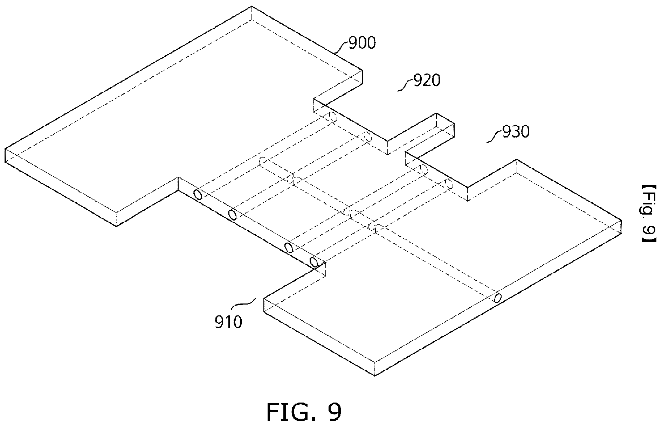

Referring to FIG. 1, one side of the punch accommodation portion 118a is shown as an open structure. However, the present disclosure is not limited thereto, and the punch accommodation portion 118a may be in the form of a through-hole through which the punch 116 is inserted via the stripper 118. Some embodiments of the punch accommodation portion 118a are described in more detail below with reference to FIGS. 8 and 9.

The stripper 118 may include a punching oil supply passage 118b positioned inside the stripper 118. The punching oil supply passage 118b may supply punching oil to the side surface of the punch accommodation portion 118a. In some embodiments, the side surface of the punch 116 may be disposed to face the side surface of the punch accommodation portion 118a, such that punching oil may be supplied to the side surface of the punch 116.

In an embodiment, the punching oil supply passage 118b may be positioned inside the stripper 118, and the stripper 118 may further include an air supply passage through which air is supplied to the side surface of the punch accommodation portion 118a. In some embodiments, the air supply passage may be positioned below the punching oil supply passage 118b. In some embodiments, the side surface of the punch 116 may be disposed to face the side surface of the punch accommodation portion 118a, such that air may be supplied to the side surface of the punch 116.

The second mold 120 may include a second base plate 124 and a die 122. The die 122 may be fixedly connected to (e.g., coupled to or attached to) the second base plate 124. The die 122 may be fixedly connected to (e.g., coupled to or attached to) the upper portion of the second base plate 124. The die 122 may include a punch insertion portion 122a.

The first mold 110 and the second mold 120 may be spaced apart from each other, and may be connected to each other. For example, a base guide post may connect the first base plate 112 to the second base plate 124, such that the first mold 110 and the second mold 120 are connected to (e.g., coupled to or attached to) each other. However, the present disclosure is not limited thereto, and the punching device according to embodiments of the present disclosure may further include other desired components in the coupling structure between the first mold 110 and the second mold 120 for cutting the metal thin-film substrate.

The first mold 110 may descend or ascend toward the second mold 120. In some embodiments, the second mold 120 may descend or ascend toward the first mold 110. In a case where the first mold 110 descends, the stripper 118 may come into contact with the die 122. In a case where the metal thin-film substrate is disposed on the die 122, the stripper 118 may be fixed to be in contact with the substrate. In some embodiments, in a case where the first mold 110 descends, the punch 116 may descend and be inserted into the punch insertion portion 122a. In a case where the metal thin-film substrate is disposed on the die 122, the punch 116 may punch and cut the metal thin-film substrate. The cut metal thin-film substrate may be separated through the punch insertion portion 122a.

The punch insertion portion 112a and/or the punch 116 may be formed in a shape corresponding to a desired standard (e.g., a predetermined standard). For example, the punch insertion portion 112a and/or the punch 116 may correspond to the cut shape of the metal thin-film substrate. Similarly, the punch accommodation portion 118a may be formed to correspond to the shape of the punch 116, so as to accommodate the punch 116.

In addition to the structure and the configuration described above, the punching device 100 illustrated in FIG. 1 may further include a configuration and components desired for manufacturing an electrode plate for a secondary battery as would be understood by those having ordinary skill in the art.

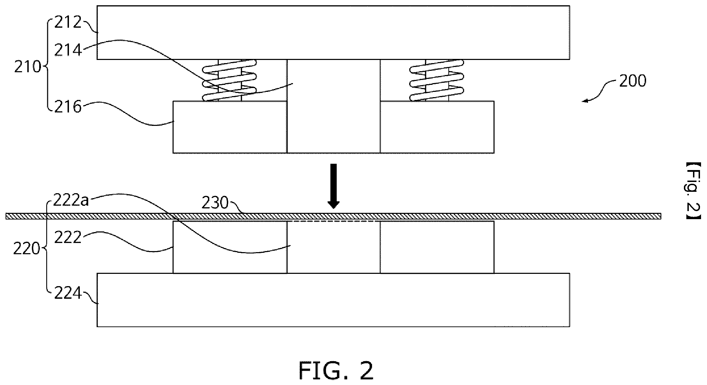

FIG. 2 illustrates a front view of a punching device 200 according to an embodiment of the present disclosure.

The punching device 200 according to an embodiment of the present disclosure may manufacture an electrode plate for a secondary battery of a desired standard (e.g., a certain or predetermined standard) by lowering the first mold 210 to fix the metal thin-film substrate 230, and cutting a portion of the metal thin-film substrate 230. The punching device 200 may include a structure in which the punching device 100 illustrated in FIG. 1 is assembled.

The metal thin-film substrate 230 may be provided between the first mold 210 and the second mold 220. The metal thin-film substrate 230 may be disposed on the die 222. In some embodiments, the disposed metal thin-film substrate 230 may be a cutting target. Thereafter, as the first mold 210 descends, the first mold 210 and the second mold 220 may fix the metal thin-film substrate 230 therebetween. In some embodiments, as the stripper plate 212 descends, the punch 214 and the stripper 216 connected to (e.g., coupled to or attached to) the stripper plate 212 may descend together. In some embodiments, the second base plate 224 connected to (e.g., coupled to or attached to) the die 222 may be fixed. The stripper 216 may fix the metal thin-film substrate 230 disposed on the die 222.

The punch 214 may be lowered together with the stripper plate 212, and the metal thin-film substrate 230 may be cut to a desired standard (e.g., a predetermined standard). For example, while the first mold 210 is lowered and the metal thin-film substrate 230 is fixed between the stripper 216 and the die 222, the punch 214 may further descend. The stripper 216 may be connected to the stripper plate 212 by using an elastic connection member (e.g., a spring pin). As such, the stripper plate 212 may further descend in a state where the stripper 216 fixes the metal thin-film substrate 230. The punch 214, which additionally descends together with the stripper plate 212, may be inserted into the punch insertion portion 222a. In the process of inserting the punch 214 into the punch insertion portion 222a, the metal thin-film substrate 230 may be cut to a desired standard (e.g., a predetermined standard).

In some embodiments, the surface of the punch 214 may be in a state of being supplied with a punching oil. The surface of the punch 214 may include a side surface of the punch 214 and a bottom surface of the punch 214. For example, the punching oil supplied through the punching oil supply passage included in the stripper 216 may be supplied to the surface of the punch 214. As such, even in a case where friction occurs when the punch 214 and the metal thin-film substrate 230 come into contact with each other, damage to the punch 214 may be prevented or substantially prevented.

In some embodiments, as punching is repeated, foreign materials (e.g., metal powder and the like) may stick to the molds 210 and 220, or burrs may be formed therein. In the punching device 200 according to an embodiment of the present disclosure, the punching oil may be supplied to the side surface of the punch 214 and the side surface of the punch accommodation portion of the stripper 216 (e.g., the punch accommodation portion 118a in FIG. 1). The supplied punching oil may prevent or substantially prevent the sticking of the foreign materials and the formation of the burrs. Low voltage defects, short circuit defects, and the like of secondary batteries manufactured by using the punching device 200 according to one or more embodiments of the present disclosure may be prevented or substantially prevented.

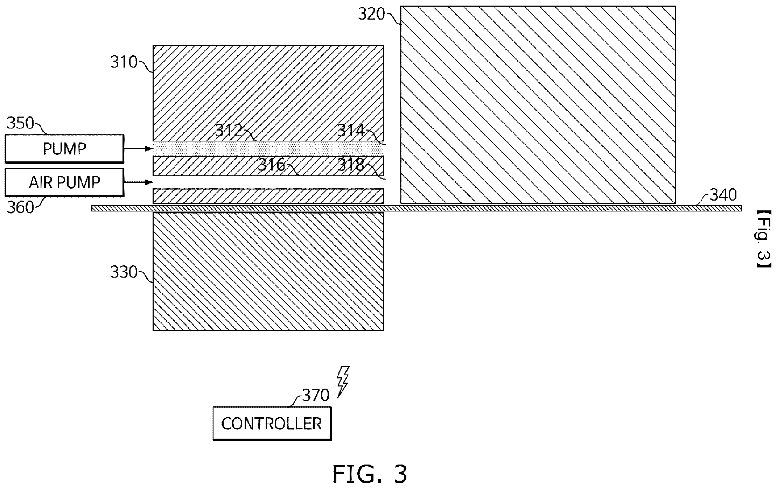

FIG. 3 illustrates a side view of a punching device according to an embodiment of the present disclosure.

The punching device may include a stripper 310, a punch 320, and a die 330. The stripper 310 may include a punching oil supply passage 312 and an air supply passage 316 therein. In some embodiments, the air supply passage 316 may be positioned below the punching oil supply passage 312. In some embodiments, the stripper 310 may include a punch accommodation portion in which the punch 320 may be accommodated.

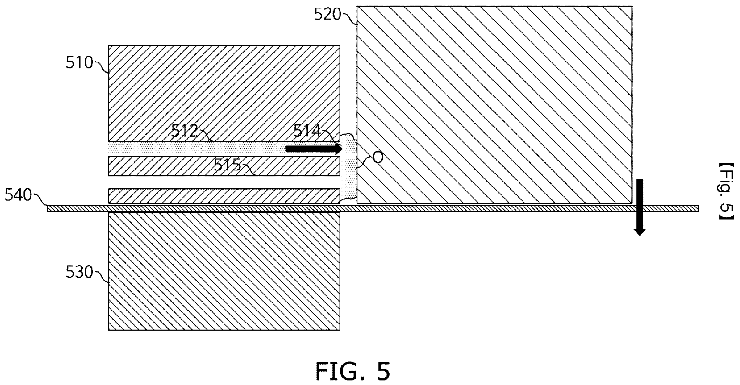

Referring to FIG. 3, as the first mold (e.g., the first mold 110 in FIG. 1 and the first mold 210 in FIG. 2) descends, the metal thin-film substrate 340 may be in a state of being fixed by the die 330 and the stripper 310. As the first mold further descends, the punch 320 may punch and cut the metal thin-film substrate 340. The process by which the punch 320 cuts the metal thin-film substrate 340 will be described in more detail below with reference to FIGS. 5 to 7.

In an embodiment, a punching oil supply nozzle 314 corresponding to a punching oil outlet may be formed on the side surface of the punch accommodation portion. The punching oil supply passage 312 may supply a punching oil through the punching oil supply nozzle 314, such that the punching oil may be supplied to the side surface of the punch accommodation portion and/or the side surface of the punch 320. In some embodiments, an air supply nozzle 318 corresponding to an air outlet may be formed on the side surface of the punch accommodation portion. The air supply passage 316 may supply air through the air supply nozzle 318, such that the air may be supplied to the side surface of the punch accommodation portion and/or the side surface of the punch 320.

In an embodiment, the punching device may further include a pump 350 and an air pump 360. The pump 350 may be connected to the punching oil supply passage 312. The pump 350 may supply the punching oil to the punching oil supply passage 312. The punching oil may be supplied to the side surface of the punch accommodation portion and/or the side surface of the punch 320 through the punching oil supply passage 312 and the punching oil supply nozzle 314. The air pump 360 may be connected to the air supply passage 316. The air pump 360 may supply air to the air supply passage 316. The air may be supplied to the side surface of the punch accommodation portion and/or the side surface of the punch 320 through the air supply passage 316 and the air supply nozzle 318.

In an embodiment, the pump 350 may supply the punching oil at a suitable flow rate (e.g., a predetermined flow rate). For example, the pump 350 may continuously supply the punching oil to the punching oil supply passage 312 at the flow rate (e.g., the predetermined flow rate), regardless of the number of times the punch 320 is raised and lowered. In other embodiments, the pump 350 may supply the punching oil in a fixed-quantity discharge method. The fixed-quantity discharge method may refer to a method of repeatedly discharging an amount (e.g., a certain amount) of the punching oil. For example, the pump 350 may correspond to a fixed-quantity discharge pump, and the punching oil may be supplied in a fixed-quantity discharge method. In some embodiments, the pump 350 may supply the punching oil in proportion to the number of times of raising and lowering. The pump 350 may supply the punching oil to the punching oil supply passage 312 at an n-time of the raising/lowering timing, where n is a natural number.

In an embodiment, the punching device may further include a controller 370. The controller 370 may control the pump 350 to adjust the amount of punching oil supplied. For example, the controller 370 may adjust the flow rate of the punching oil supplied to the punching oil supply passage 312. In some embodiments, the controller 370 may adjust an amount (e.g., a certain or predetermined amount) of punching oil supplied in a fixed-quantity discharge method. In some embodiments, the controller 370 may control the air pump 360 to adjust the amount of air supplied. For example, the controller 370 may adjust the volume and the atmospheric pressure of the air supplied to the air supply passage 316. The controller 370 may communicate with the pump 350 and/or the air pump 360 by using various suitable wired or wireless methods.

In an embodiment, the controller 370 may control the pump 350 to supply the punching oil so as to be associated with the raising and lowering of the punch 320. For example, the controller 370 may control the pump 350 to supply the punching oil in proportion to the number of times the punch 320 is raised and lowered. For example, the controller 370 may control the pump 350 to supply the punching oil every time the punch 320 is raised and lowered.

Similarly, the controller 370 may control the air pump 360 to supply the air in association with the raising and lowering of the punch 320. For example, the controller 370 may control the air pump 360 to supply the air in proportion to the number of times the punch 320 is raised and lowered. For example, the controller 370 may control the air pump 360 to supply the air whenever the punch 320 is raised and lowered.

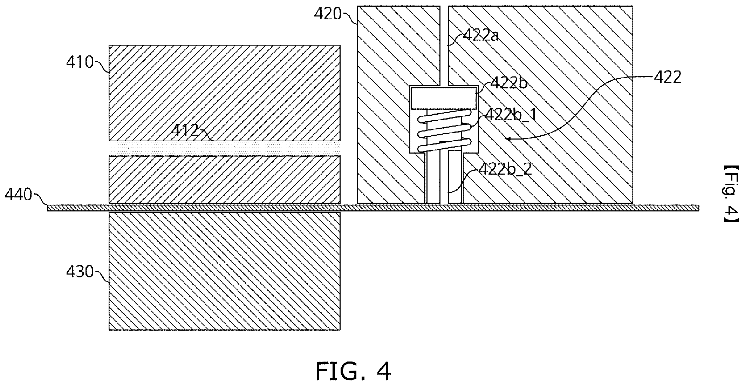

FIG. 4 illustrates a side view of a punching device according to an embodiment of the present disclosure.

Referring to FIG. 4, a metal thin-film substrate 440 may be fixed by a die 430 and a stripper 410. The stripper 410 may include a punching oil supply passage 412.

In an embodiment, the punch 420 may include an air supply hole 422, instead of the stripper 410 including an air supply passage (e.g., the air supply passage 316 in FIG. 3). In some embodiments, the air supply hole 422 may be formed to pass through the punch 420. The air supply hole 422 may supply air to the bottom surface of the punch 420.

The air supply hole 422 may include an air supply line 422a and a push pin 422b. The push pin 422b may include a push pin spring 422b_1 and a push pin hole 422b_2. The push pin spring 422b_1 assists to lift the descending push pin 422b to an original position thereof. The push pin hole 422b_2 may be formed to pass through the inside of the push pin 422b.

The air supply line 422a may supply air to the air supply hole 422. The push pin 422b may block air supplied below a certain atmospheric pressure from the air supply line 422a. In a case where air supplied above a certain atmospheric pressure is supplied through the air supply line 422a, the air may be supplied to the inner space of the air supply hole 422. The supplied air may be supplied to the bottom surface of the punch 420 through the push pin hole 422b_2. Thereafter, in a case where the air supplied from the air supply line 422a is less than a certain atmospheric pressure, the push pin spring 422b_1 may lift the push pin 422b to the original position thereof.

FIG. 4 illustrates that the punch 420 includes the air supply hole 422, instead of the stripper 410 including the air supply passage, but the present disclosure is not limited thereto. For example, the stripper 410 may also include the air supply passage, while the punch 420 may include the air supply hole 422. In this case, the air may be supplied more smoothly to the surface of the punch 420. In some embodiments, the air supply passage may supply the air to the side surface of the punch 420, and the air supply hole 422 may supply the air to the bottom surface of the punch 420. As such, the removal of the foreign materials stuck/attached to the surface of the punch 420 may be made easier.

FIG. 5 illustrates a side view showing a state in which a punching oil O is supplied in a punching device according to an embodiment of the present disclosure. The punching device described in more detail below with reference to FIGS. 5 to 7 is illustrated as including an air supply passage 515 without an air supply hole, but the present disclosure is not limited thereto. For example, the punching device may include the air supply hole 422 of FIG. 4.

The processes described in more detail below with reference to FIGS. 5 to 7 may be performed in the order illustrated in FIGS. 5 to 7. FIG. 5 may illustrate a state before a punch 520 descends and cuts a metal thin-film substrate 540. In some embodiments, FIG. 5 illustrates that the metal thin-film substrate 540 is fixed by a die 530 and a stripper 510, but the present disclosure is not limited thereto. For example, the process of supplying the punching oil O may be performed before a first mold descends and the stripper 510 fixes the metal thin-film substrate 540 disposed on the die 530. In other embodiments, the process of supplying the punching oil O may be performed regardless of whether the first mold is raised or lowered.

The punching oil supply passage 512 may supply the punching oil O to a side surface of a punch accommodation portion. In some embodiments, the punching oil O may be supplied through a punching oil supply nozzle 514 formed on the side surface of the punch accommodation portion. In some embodiments, the side surface of the punch 520 may be disposed to face the side surface of the punch accommodation portion in which the punching oil supply nozzle 514 is formed. The supplied punching oil O may flow between the side surface of the punch accommodation portion and the side surface of the punch 520. In this manner, the punching oil O may be supplied to the side surface of the punch 520. In some embodiments, the punching oil O may flow between the side surface of the punch accommodation portion and the side surface of the punch 520, and may be supplied to the cut portion of the metal thin-film substrate 540.

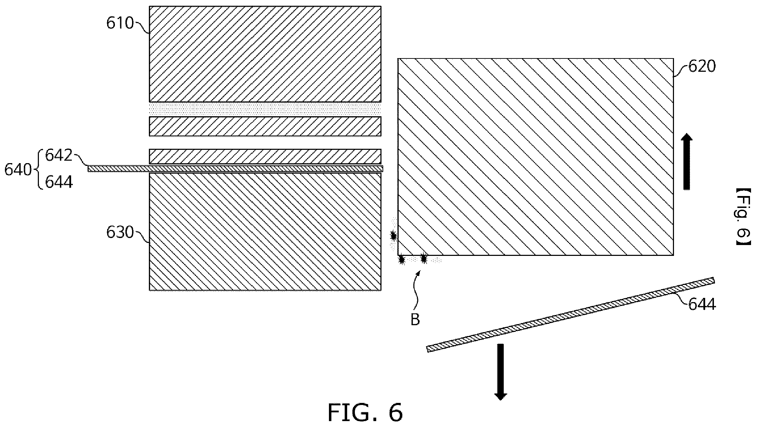

FIG. 6 illustrates a side view showing a state in which a metal thin-film substrate 640 is punched by a punching device according to an embodiment of the present disclosure.

In a state in which the metal thin-film substrate 640 is fixed by a die 630 and a stripper 610, a punch 620 may be lowered to cut the metal thin-film substrate 640. The metal thin-film substrate 640 may be separated into a cut substrate 642 and a separated substrate 644. The lowered punch 620 may be raised again after cutting the metal thin-film substrate 640.

In the process of lowering the punch 620 to cut the metal thin-film substrate 640, foreign materials B may be stuck or attached to the surface of the punch 620. For example, powder generated while cutting the metal thin-film substrate 640 may be stuck or attached to the surface of the punch 620. In some embodiments, the supplied punching oil may be unevenly stuck to the surface of the punch 620. The foreign materials B may affect a quality of the cutting of the metal thin-film substrate 640 to be performed later (e.g., a subsequent cutting), and thus, may need to be removed.

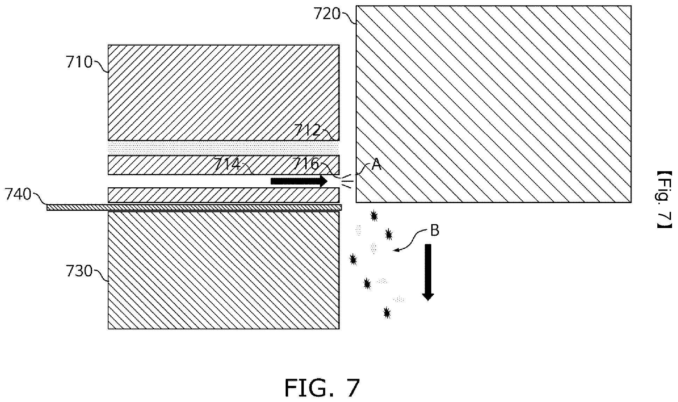

FIG. 7 illustrates a side view showing a state in which air A is supplied in a punching device according to an embodiment of the present disclosure.

FIG. 7 may illustrate a state after a punch 720 is lowered to cut a metal thin-film substrate 740. In some embodiments, FIG. 7 illustrates that the metal thin-film substrate 740 is fixed by a die 730 and a stripper 710, but the present disclosure is not limited thereto. For example, the process of supplying the air A may be performed in a case where a cut substrate (e.g., the cut substrate 642 of FIG. 6) is disposed on the die 730 after a first mold is raised and lowered. In other embodiments, the process of supplying the air A may be performed after the cut substrate is moved. In other embodiments, the process of supplying the air A may be performed regardless of whether the first mold is raised or lowered.

The stripper 710 may include an air supply passage 714. The air supply passage 714 may supply the air A to a side surface of a punch accommodation portion. In some embodiments, the air A may be supplied through an air supply nozzle 716 formed on the side surface of the punch accommodation portion. In some embodiments, the side surface of the punch 720 may be disposed to face the side surface of the punch accommodation portion in which the air supply nozzle 716 is formed. For example, the air supply nozzle 716 may be disposed to face the side surface of the punch 720. In this case, air with a stronger pressure may be supplied to the side surface of the punch 720 where a relatively larger amount of powder may be attached.

Foreign materials B may be attached to the surface of the lifted punch 720. The air A supplied through the air supply passage 714 may be supplied at a pressure above a suitable level (e.g., a certain or predetermined level) so as to remove the attached foreign materials B. For example, the air A may be supplied at a pressure of 0.1 Mpa or more. The air A may include various suitable components. For example, the air A may be air in the atmosphere. In some embodiments, the air A may be an inert gas.

In an embodiment, the air supply nozzle 716 may be positioned lower than a punching oil supply nozzle 712 positioned inside the stripper. The punching oil may be supplied from the punching oil supply nozzle 712, and may flow toward the air supply nozzle 716. In some embodiments, the air supply nozzle 716 supplies air to the side surface of the punch accommodation portion, thereby preventing or substantially preventing the flowing punching oil from flowing into the air supply nozzle 716.

As the punch 720 repeatedly cuts the metal thin-film substrate, the punch 720 may break or cracks may occur. The punching device according to some embodiments of the present disclosure may prevent or substantially prevent damage to the mold by supplying the punching oil. In some embodiments, damage to the punch 720 may be prevented or substantially prevented by supplying the air A to remove the foreign materials B that may be stuck/attached to the surface of the punch 720. In some embodiments, because no burrs may be formed in the mold, the metal thin-film substrate 740 may be cut more uniformly.

It may be easier and more stable to supply the punching oil from inside the stripper 710. For example, in a case where spraying and applying the punching oil to the metal thin-film substrate 740, the punching oil may not be applied uniformly or substantially uniformly, or a large amount of punching oil may be applied. In other embodiments, the punching device may supply the punching oil directly to the cut region, such that the punching oil may be supplied more evenly.

In other embodiments, in the case where the punching oil is supplied from inside the punch 720, the punching oil supply nozzle may be formed on the surface of the punch 720. Because the punch 720 may be easily damaged by cutting by being in direct contact with the metal thin-film substrate 740, the punching oil supply nozzle formed on the surface of the punch 720 may be damaged. In other embodiments, because the stripper 710 may not directly cut the metal thin-film substrate 740, the stripper 710 may not be easily damaged even in a case where the stripper 710 includes the punching oil supply passage, the punching oil supply nozzle 712, the air supply passage 714, and/or the air supply nozzle 716. In this manner, the durability of the punching device according to some embodiments of the present disclosure may be improved.

FIG. 8 illustrates a perspective view of a stripper 800 according to an embodiment of the present disclosure.

The stripper 800 may include a plurality of punch accommodation portions 810, 820, and 830. FIG. 8 illustrates three punch accommodation portions 810, 820, and 830, but the present disclosure is not limited thereto. For example, the stripper 800 may include fewer than three or more than three punch accommodation portions.

In an embodiment, the punch accommodation portions 810, 820, and 830 may have the shape of a through-hole. In the assembled punching device, a punch may be inserted through the stripper 800. In some embodiments, the punch may be inserted into and accommodated in the punch accommodation portions 810, 820, and 830.

In an embodiment, one or more punching oil supply nozzles 812_1 to 812_4 may be formed on the side surface of each of the plurality of punch accommodation portions 810, 820, and 830. Referring to FIG. 8, the plurality of punching oil supply nozzles 812_1 to 812_4 may be formed on one side surface of the first punch accommodation portion 810. However, the present disclosure is not limited thereto, and one or more punching oil supply nozzles may be formed on another side surface of the first punch accommodation portion 810. For example, one or more punching oil supply nozzles may be formed on each of the plurality of sides of the first punch accommodation portion 810. One or more punching oil supply nozzles may be formed on each of the first and second side surfaces of the first punch accommodation portion 810. In this structure, the side surface of the punch may be arranged to be surrounded (e.g., around a periphery thereof) by the first side surface and the second side surface. By forming the punching oil supply nozzles on the plurality of side surfaces of the stripper 800, the punching oil may be supplied more smoothly.

The stripper may include a plurality of punching oil supply passages 814_1 to 814_4. The plurality of punching oil supply nozzles 812_1 to 812_4 may be connected to the plurality of punching oil supply passages 814_1 to 814_4, respectively. For example, the first punching oil supply passage 814_1 may be connected to the first punching oil supply nozzle 812_1, such that the punching oil may be supplied from the first punching oil supply passage 814_1 to the first punching oil supply nozzle 812_1.

The plurality of punching oil supply passages 814_1 to 814_4 may be connected to one punching oil passage 816. In some embodiments, the punching oil passage 816 may be branched to form the plurality of punching oil supply passages 814_1 to 814_4. The plurality of punching oil supply passages 814_1 to 814_4 may be connected to one or more punching oil supply nozzles 812_1 to 812_4 formed in the plurality of punch accommodation portions 810, 820, and 830. Accordingly, the punching oil passage 816 may be connected to the plurality of punching oil supply nozzles 812_1 to 812_4.

The punching oil passage 816 may be connected to a pump (e.g., the pump 350 in FIG. 3). The pump may supply the punching oil to the punching oil passage 816. Thereafter, the punching oil may be supplied to the plurality of punching oil supply passages 814_1 to 814_4 through the punching oil passage 816. The supplied punching oil may be supplied again to the punching oil supply nozzles 812_1 to 812_4 respectively connected to the plurality of punching oil supply passages 814_1 to 814_4. In some embodiments, the punching oil may be sequentially supplied from the punching oil passage 816 to the punching oil supply nozzles 812_1 to 812_4 through the punching oil supply passages 814 to 814_4.

FIG. 8 illustrates that the stripper 800 includes one punching oil passage 816, but the present disclosure is not limited thereto. For example, the stripper 800 may include a plurality of punching oil passages, and a pump may be connected to each of the plurality of punching oil passages. In some embodiments, each of the plurality of punching oil passages 816 may be connected to a separate punching oil supply passage.

Although an air supply nozzle, an air supply passage, and an air passage are not illustrated, the stripper 800 is not limited thereto. For example, similar to the punching oil supply nozzles 812_1 to 812_4, an air supply nozzle may be formed inside the stripper 800, except that air is supplied instead of the punching oil. The air supply passage may be formed similarly to the punching oil supply passages 814_1 to 814_4, except that air is supplied instead of the punching oil. The air passage may be formed similarly to the punching oil passage 816, except that air is supplied instead of the punching oil.

The configuration of supplying the punching oil from inside the punch may be cumbersome because the punching oil supply passage may be formed for each punch, and the punching oil supply passage may be separately controlled for each punch. In other embodiments, the punching device according to some embodiments of the present disclosure may collectively control the supply of punching oil through the punching oil passage 816, making it easier to manage the supply of the punching oil. In more detail, in the structure in which the plurality of punches are raised and lowered, the punching oil may be effectively supplied to the plurality of punches by forming a passage with a more simple structure only in the stripper 800 without forming the passage in each punch.

FIG. 9 illustrates a perspective view of a stripper 900 according to an embodiment of the present disclosure.

The punching oil supply nozzle, the punching oil supply passage, and the punching oil passage formed in the stripper 900 may be understood based on the description provided above with reference to FIG. 8. With reference to FIG. 9, the differences from the stripper 800 described above with reference to FIG. 8 may be described in more detail hereinafter.

In an embodiment, the stripper 900 may include a plurality of punch accommodation portions 910, 920, and 930. The punch accommodation portions 910, 920, and 930 may have a structure in which one side surface is opened. Referring to FIG. 9, at least a portion of the side surface of the stripper 900 may be opened, and thus, one side surface of each of the punch accommodation portions 910, 920, and 930 may be opened. In the assembled punching device including the stripper 900, at least a portion of the side surface of the punch may be surrounded (e.g., around a periphery thereof) by the side surfaces of the punch accommodation portions 910, 920, and 930. In some embodiments, a remaining portion of the side surface of the punch may not face the side surfaces of the punch accommodation portions 910, 920, and 930.

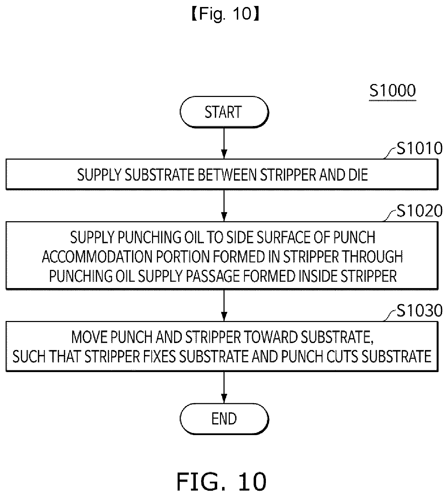

FIG. 10 illustrates a flowchart showing an example of a punching method 1000 according to an embodiment of the present disclosure. In an embodiment, the punching method S1000 may be performed by a punching device (e.g., the punching device 100 of FIG. 1) that includes a die, a stripper, and a punch.

The punching method S1000 may start, and a substrate may be supplied between the stripper and the die (S1010). In an embodiment, the punching device may supply a punching oil to a side surface of a punch accommodation portion formed in the stripper through a punching oil supply passage formed inside the stripper (S1020). The punching device may supply the punching oil through a plurality of punching oil supply passages by using a pump, and may sequentially supply the punching oil through a plurality of nozzles formed on the side surface of the punch accommodation portion.

In an embodiment, the punching device may supply the punching oil to the side surface of the punch accommodation portion prior to cutting the substrate. In some embodiments, the punching device may supply the punching oil to the side surface of the punch accommodation portion at the same or substantially the same time as the cutting of the substrate.

In an embodiment, the punching device may move the punch and the stripper toward the substrate, such that the stripper fixes the substrate and the punch cuts the substrate (S1030), and the method S1000 may end. The side surface of the punch may be disposed to face the side surface of the stripper.

In an embodiment, the punching device may remove foreign materials attached to the surface of the punch by supplying air to the surface of the punch by using at least one of an air supply passage formed in the stripper or an air supply hole formed in the punch. The punching device may remove the foreign materials attached to the surface of the punch by supplying air to the surface of the punch after punching the substrate.

However, the present disclosure is not limited to the flowchart illustrated in FIG. 10 and the related description above. For example, one or more processes in the flowchart and the related description may be added, changed, or deleted, the order of one or more of the processes may be variously modified as needed or desired, and/or one or more processes may be performed concurrently or substantially simultaneously with each other.

The electronic or electric devices and/or any other relevant devices or components according to embodiments of the present disclosure described herein (e.g., the controller and the like) may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the example embodiments of the present disclosure.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, below.

## Claims

1. A punching device (100, 200) comprising:
a die (122, 222, 330, 430, 530, 630, 730) configured to receive a substrate (230) disposed thereon;
a stripper (118, 216, 310, 410, 510, 610, 710, 800, 900) spaced apart from and facing the die (122, 222, 330, 430, 530, 630, 730) and configured to move toward the substrate (230) to fix the substrate (230); and
a punch (116, 214, 320, 420, 520, 620, 720) configured to move toward the substrate (230) and cut the substrate (230),
wherein the stripper (118, 216, 310, 410, 510, 610, 710, 800, 900) comprises:
a punch accommodation portion (118a, 810, 820, 830, 910, 920, 930) configured to accommodate the punch (116, 214, 320, 420, 520, 620, 720); and
a punching oil supply passage (118b, 312, 412, 512, 814) located inside the stripper (118, 216, 310, 410, 510, 610, 710, 800, 900), and configured to supply a punching oil (O) to a side surface of the punch accommodation portion (118a, 810, 820, 830, 910, 920, 930).

2. The punching device (100, 200) as claimed in claim 1, wherein the punch accommodation portion (118a, 810, 820, 830, 910, 920, 930) has a shape of a through-hole through which the punch (116, 214, 320, 420, 520, 620, 720) is configured to be inserted via the stripper (118, 216, 310, 410, 510, 610, 710, 800, 900).

3. The punching device (100, 200) as claimed in claim 1 or 2, wherein one side surface of the punch accommodation portion (118a, 810, 820, 830, 910, 920, 930) is opened.

4. The punching device (100, 200) as claimed in any one of the preceding claims, wherein the punch accommodation portion (118a, 810, 820, 830, 910, 920, 930) comprises a plurality of side surfaces,
a nozzle (314, 514, 712, 812) of the punching oil supply passage (118b, 312, 412, 512, 814) is located on a first side surface from among the plurality of side surfaces of the punch accommodation portion (118a, 810,820, 830, 910, 920, 930), and
a side surface of the punch (116, 214, 320, 420, 520, 620, 720) is configured to face the first side surface.

5. The punching device (100, 200) as claimed in claim 4, wherein the punching oil supply passage (118b, 312, 412, 512, 814) comprises a plurality of punching oil supply passages (814_1 to 814_4),
a first nozzle (812_1) of a first punching oil supply passage (814_1) and a second nozzle (812_2) of a second punching oil supply passage (814_2) from among the plurality of punching oil supply passages (814_1 to 814_4) are located on the first side surface of the punch accommodation portion (118a, 810, 820, 830, 910, 920, 930), and
the side surface of the punch (116, 214, 320, 420, 520, 620, 720) is configured to face the first side surface.

6. The punching device (100, 200) as claimed in claim 4, wherein the punching oil supply passage (118b, 312, 412, 512, 814) comprises a plurality of punching oil supply passages (814_1 to 814_4),
a first nozzle (812_1) of a first punching oil supply passage (814_1) from among the plurality of punching oil supply passages (814_1 to 814_4) is located on the first side surface of the punch accommodation portion (118a, 810, 820, 830, 910, 920, 930),
a second nozzle (812_2) of a second punching oil supply passage (118b, 312, 412, 512, 814) from among the plurality of punching oil supply passages (814_1 to 814_4) is located on a second side surface from among the plurality of side surfaces of the punch accommodation portion (118a, 810, 820, 830, 910, 920, 930), and
the side surface of the punch (116, 214, 320, 420, 520, 620, 720) is configured to face the first side surface.

7. The punching device (100, 200) as claimed in any one of the preceding claims, wherein the stripper (118, 216, 310, 410, 510, 610, 710, 800, 900) further comprises an air supply passage (316, 515, 714) located inside the stripper (118, 216, 310, 410, 510, 610, 710, 800, 900), and configured to supply air (A) to the side surface of the punch accommodation portion (118a, 810, 820, 830, 910, 920, 930).

8. The punching device (100, 200) as claimed in claim 7, wherein the air supply passage (316, 515, 714) is located below the punching oil supply passage (118b, 312, 412, 512, 814).

9. The punching device (100, 200) as claimed in claim 7 or 8, further comprising a controller (370) configured to adjust an amount of the air (A),
wherein the controller (370) is configured to control an air pump (360) connected to the air supply passage (316, 515, 714) to supply the air (A) in proportion to a number of times the punch (116, 214, 320, 420, 520, 620, 720) is raised and lowered.

10. The punching device (100, 200) as claimed in any one of the preceding claims, wherein the punch (116, 214, 320, 420, 520, 620, 720) comprises an air supply hole (422) extending through the punch (116, 214, 320, 420, 520, 620, 720), and configured to supply air (A) to a bottom surface of the punch (116, 214, 320, 420, 520, 620, 720).

11. The punching device (100, 200) as claimed in any one of the preceding claims, wherein the stripper (118, 216, 310, 410, 510, 610, 710, 800, 900) comprises a plurality of punch accommodation portions (810, 820, 830, 910, 920, 930) configured to accommodate a plurality of punches (116, 214, 320, 420, 520, 620, 720), and a plurality of punching oil supply passages (814_1 to 814_4) configured to supply the punching oil (O),
a first nozzle (812_1) of a first punching oil supply passage (814_1) from among the plurality of punching oil supply passages (814_1 to 814_4) is located on a side surface of a first punch accommodation portion (810, 910) from among the plurality of punch accommodation portions (810, 820, 830, 910, 920, 930),
a second nozzle (812_2) of a second punching oil supply passage (814_2) from among the plurality of punching oil supply passages (814_1 to 814_4) is located on a side surface of a second punch accommodation portion (820, 920) from among the plurality of punch accommodation portions (810, 820, 830, 910, 920, 930),
a side surface of a first punch (116, 214, 320, 420, 520, 620, 720) is configured to face the side surface of the first punch accommodation portion (810, 910), and
a side surface of a second punch (116, 214, 320, 420, 520, 620, 720) is configured to face the side surface of the second punch accommodation portion (820, 920).

12. The punching device (100, 200) as claimed in any one of claims 1 to 11, wherein the punching oil (O) is supplied in a fixed-quantity discharge method.

13. The punching device (100, 200) as claimed in any one of claims 1 to 11, wherein the punching oil (O) is supplied at a predetermined flow rate.

14. The punching device (100, 200) as claimed in any one of the preceding claims, further comprising a controller (370) configured to adjust an amount of the punching oil (O),
wherein the controller (370) is configured to control a pump (350) connected to the punching oil supply passage (118b, 312, 412, 512, 814) to supply the punching oil (O) in proportion to a number of times the punch (116, 214,320, 420, 520, 620, 720) is raised and lowered.

15. A punching method (1000) comprising:
supplying a substrate (230) between a stripper (118, 216, 310, 410, 510, 610, 710, 800, 900) and a die (122, 222, 330, 430, 530, 630, 730);
supplying a punching oil (O) to a side surface of a punch accommodation portion (118a, 810, 820, 830, 910, 920, 930) of the stripper (118, 216, 310, 410, 510, 610, 710, 800, 900) through a punching oil supply passage (118a, 312, 412, 512, 814) located inside the stripper (118, 216, 310, 410, 510, 610, 710, 800, 900); and
moving a punch (116, 214, 320, 420, 520, 620, 720) and the stripper (118, 216, 310, 410, 510, 610, 710, 800, 900) toward the substrate (230), such that the stripper (118, 216, 310, 410, 510, 610, 710, 800, 900) fixes the substrate (230) and the punch (116, 214, 320, 420, 520, 620, 720) cuts the substrate (230),
wherein a surface of the punch (116, 214, 320, 420, 520, 620, 720) is disposed to face a side surface of the stripper (118, 216, 310, 410, 510, 610, 710, 800, 900).
